# EUROPEAN PATENT SPECIFICATION

(11) **EP 3 490 820 B1**
(45) Date of publication and mention of the grant of the patent: **13.04.2022**
(21) Application number: 17833638.4
(22) Date of filing: 28.07.2017
(51) Int. Cl.: B60C 19/12, B60C 17/06, B60C 17/00, B60C 5/00, B29D 30/04, B60C 7/24, B29D 30/06

(54) **ANTI-PUNCTURE SHIELD INSERT FOR WHEEL**
ABSCHIRMUNGSEINSATZ GEGEN REIFENPANNEN FÜR EIN RAD
INSERT DE PROTECTION ANTI-CREVAISON POUR UNE ROUE

(30) Priority: 29.07.2016 FI 20160191
(43) Date of publication of application: 05.06.2019
(73) Proprietor: Huck To Flat Oy, 40800 Vaajakoski (FI)
(72) Inventor: KOKKONEN, Matti Leo Antero, 40800 Vaajakoski (FI); KYMÄLÄINEN, Tapio, 40800 Vaajakoski (FI); HJERPPE, Sauli, 40800 Vaajakoski (FI)
(74) Representative: Heinonen & Co
(86) International application number: PCT/FI2017/050560
(87) International publication number: WO 2018/020081

(56) References cited:
- DE-A1- 2 724 273
- FR-A- 999 831
- US-A- 3 949 796
- US-A- 3 949 796
- US-A- 4 334 565

## Description

### FIELD OF THE INVENTION

Generally the present invention relates to tire inserts. Particularly, however not exclusively, the invention pertains to a tubeless tire anti-puncture insert for protecting the rim.

### PRIOR ART

In general, tubeless tires are used on bicycles, motorcycles and cars. A common cause of a flat tire is puncturing of the tire by a sharp object. Another common cause of a flat tire is that the tire is left, as two layers, between the rim and the ground as the tire collapses at a high speed or in a falling movement. During the hard hit, the rim penetrates through the both layers of the tire, both the sidewall and the tread. Increasing the strength of the tire may reduce the risk of a flat tire but this increase in the strength of the tire leads to an increased rolling resistance (friction) and mass in the tire. A low rolling resistance and mass are very important in cycling since the bike mostly is driven by muscle power. A tire punctured between the rim and the ground poses a huge problem in mountain biking. The sidewalls of mountain-bike rims are very narrow, and, therefore, sharp in order to eliminate any excess mass.

The flat tire problem has been addressed in a variety of ways. The most common way to add a fluid added inside the tire, containing particles that harden with compressed air. As air tries to exit through a narrow hole in the punctured tire, the fluid, in a way, repairs the tire. However, this does not work well for cut-like holes. Another solution is to fit a smaller tire inside the tire, allowing more pressure to be introduced. As this smaller tire does not contact the sidewalls or the actual contact surface of the tire, it does not increase the rolling resistance. The pressures and the weight of the inner tire vary from 6 to 12 bar and approximately 120 to 200 g per tire, respectively. If the rim-facing side of the inner tire is open, it makes the rim weaker when pressurized because the air pressure compresses the rim. As the rim is compressed, the spoke tension decreases, and, consequently, the entire bike becomes less rigid. A tube tire is not open and allows much higher pressures to be used without decreasing the spoke tension. In order to inflate the inner tire, either a second hole or a separate fitting is needed, allowing air to be separately introduced into the two separate tires through the same hole. Besides, top racing cyclists have complained about that the inner tire causes a lack of shock absorption and, therefore, excessive bumping. Since pressures lower than two bar are usually used in the outer tires of mountain bikes, the outer tire requires, in addition, the above-mentioned fluid to tighten against the rim. The amount of fluid needed is approximately 60 g, resulting in an overall weight of almost 200 g per tire. None of these applications actually enters between the internal layers of the tire to absorb the force of a shock but the inner tires prevent the tire from totally collapsing under pressure. Thus, the use of inner tires does not provide a very good protection against hits in curve driving.

The most lightweight solution commonly used by hobby cyclists is a pipe insulation made of cellular plastic (approximately 60 g). The pipe insulation is formed into a loop by taping its ends together. The pipe insulation is fitted inside a tire, and, if the tire collapses, it possibly stays between the rim and the tire to absorb the shock. The pipe insulation being round and smaller than the diameter of the inside of the tire, it does not work reliably. If the diameter of the pipe insulation is equal to the inner diameter of the tire in size, it has an adverse effect on the operation of the tire and increases the rolling resistance.

A considerable number of different internal tire shield inserts intended to prevent rim damage are known from the prior art, one of them being presented by US3949796A. In this solution, a hard insert with protuberances placing the insert inside the tire and the rim is fitted inside a tire to prevent the rim from hitting the ground in case of a flat tire. This solution corresponds to the above-mentioned inner tire solution. This solution would be too heavy and would impair the properties of the tire in curve driving, for instance.

### SUMMARY OF THE INVENTION

The objective of the embodiments of the present invention is to at least alleviate one or more of the aforementioned drawbacks evident in the prior art. The objective technical problem of the present invention is how to solve a rim protecting tire insert that is lightweight and simple to install on conventional bicycle tubeless tires. Installing and replacing a tire, which is one of the most common problems of a cyclist, should be as effortless as possible and the installation of an insert in a conventional tire shouldn't add significantly to the tire changing process. Further, another objective technical problem is to create a solution that meets the previous conditions so that it does not require special arrangements from the tire or rim itself, but is suitable for conventional tire structures.

The objective can be achieved by means of a single, flat cellular-plastic loop that can be fitted inside a tire and that essentially extends, at the widest point of the tire, from sidewall to sidewall. If the tire collapses, the cellular plastic stays between the tire layers to absorb the force of the shock. The cellular plastic thus protects the tire and the rim from getting a sharp hit. Herein, the cellular plastic is presented as an example but other materials are feasible.

The invention aims at protecting a tire and rim while the tire collapses under a high pressure. The invention provides a solution that is lightweight, simple in structure and increases very little rolling resistance in comparison to the prior art.

The present invention has a further advantage of take up very little space of the tire's air space. The present invention provides a solution which is thin, allowing the tire air space to be maintained close to the original volume of the tire. The size of the air space in the tire has also an effect on how the tire may puncture. Smaller airspace requires higher pressures and therefore makes the tire more prone to puncture because the internal pressure tends to break the tire more easily than the smaller pressure at the point of impact. Even in terms of the tire's rolling characteristics, the optimum pressure is achieved better with the larger airspace. Thus, it is preferable that an insert reduces the tire's air space as little as possible.

In accordance with one aspect of the present invention an anti-puncture shield insert for a wheel, which wheel comprises a rim and an inflated tire connected to the edges of the rim,
wherein said anti-puncture shield insert is made of a shock-absorbing material, characterized in that said shield insert is placed at the widest point between the inner sidewalls of the tire, and, as a hit causes the tire to collapse, the shield insert absorbs the shock taken by the tire and the rim, by staying between inner parts of the tire, and, further, in that the shield insert is floating relative to the tire, and in that, the anti-puncture shield insert comprises a sandwich structure.

According to an exemplary embodiment of the present invention the anti-puncture shield insert for a wheel comprising an inflated tubeless tire. According to a preferred exemplary embodiment of the present invention the anti-puncture shield insert for a bicycle wheel. According to another exemplary embodiment of the present invention the anti-puncture shield insert for a motor vehicle wheel, such as the wheel of a motorbike or a car.

According to an exemplary embodiment of the present invention the anti-puncture shield insert comprises cellular plastic with cells that stretch and, when needed, burst as a result of a hit taken by the tire, by absorbing the energy of the shock, and, thereby, protecting the tire and rim.

According to an exemplary embodiment of the present invention the anti-puncture shield insert comprises cellular plastic that may be further coated with another material.

According to an exemplary embodiment of the present invention the anti-puncture shield insert may comprise a sandwich structure, which may comprise cellular plastic or other suitable honeycomb core wherein suitable skin material is laminated. A skin may be laminated on any one or more sides of the anti-puncture shield insert. Many feasible skin materials are known from the art.

According to an exemplary embodiment of the present invention the anti-puncture shield insert is removably inserted into the wheel. This allows the anti-puncture shield insert to be changed in case of breakage or wear caused by use.

According to an exemplary embodiment of the present invention the anti-puncture shield insert makes it easier to mount the tubeless tire on the rim by air pressure, by keeping the sidewalls of the tire apart and against the edges of the rim. In this embodiment the anti-puncture shield insert width is essentially the same as the tire maximum inner width.

As being appreciated by a skilled person, the anti-puncture shield insert is scalable in size within the physical limitations of the present invention, which allows for a variety of applications and freedom of design. Size and materials may be chosen in view of the preferred properties set by each application e.g. in terms of driving style, tire type and driving surface (e.g. terrain, soil or tarmac) type.

As briefly reviewed hereinbefore, the utility of the different aspects of the present invention arises from a plurality of issues depending on each particular embodiment.

The term "exemplary" refers herein to an example or example-like feature, not the sole or only preferable option.

The term "insert" is used to refer to the characteristic that the anti-puncture shield is removably situated inside the wheel, i.e. between the rim and tire of a vehicle. The term "shield" is used to refer to the purpose of the insert, which purpose is to shield the rim between the tire inner surface and the rim in case of puncture or shock to the tire that could cause a pinch flat.

### LIST OF DRAWINGS

In the following, the invention will be described in detail with reference to the accompanying figures showing some embodiments of the invention, wherein
Figure 1 shows the anti-puncture shield insert according to the present invention in its normal state,
Figure 2 shows the anti-puncture shield insert according to the present invention in operation.

### DETAILED DESCRIPTION OF THE DRAWINGS

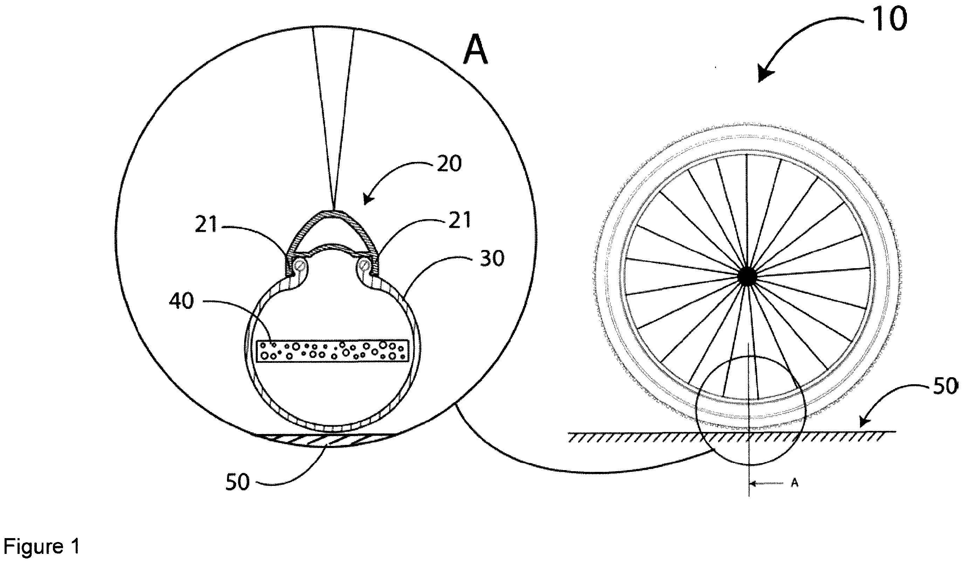

Figures 1 shows an embodiment of the bicycle wheel (10) according to the invention. The bicycle comprises a rim (20), a tubeless tire (30) set on rim flanges (21) and an anti-puncture shield insert (40).The shield insert (40) works best with light vehicle such as bicycles because the shock-absorbing material has a greater effect for lighter weights.

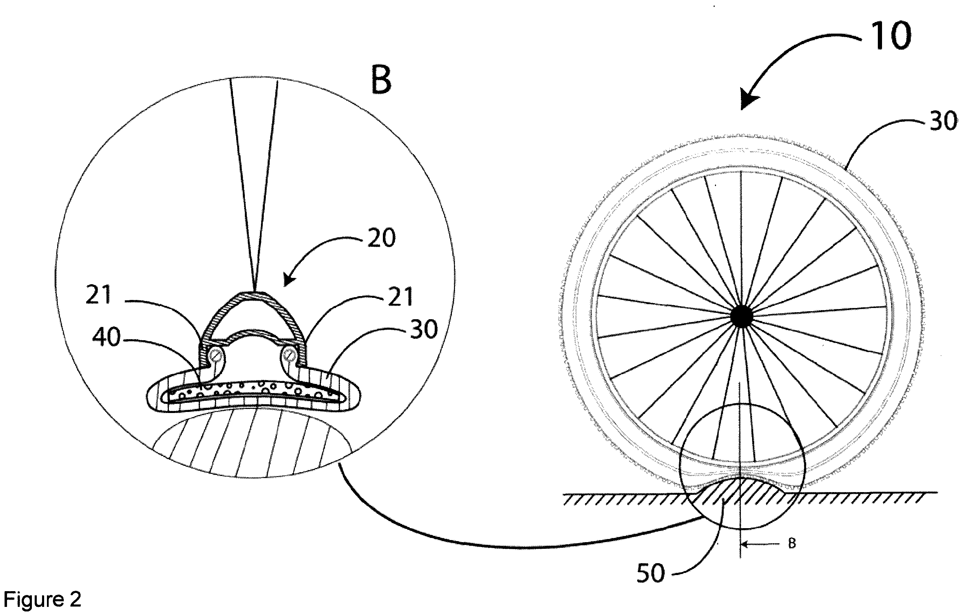

Figure 2 shows a situation where the tire is collapsed by a force directed to the ground and the anti-puncture shield insert (40) is left between the collapsed sidewalls of the tire to protect the tire from the compression force remaining between the ground (50) (or some other obstacle) and the rim, and, thereby, to prevent the tire from puncturing (also referred to as pinch flat).

The shield insert (40) is applicable to all bicycles or electrically assisted bicycles requiring a low rolling resistance and an additional shield for their tires. The embodiments of the figures 1 and 2 show a mountain-bike tire (30). The shield insert (40) also works well in case of a flat tire because it protects the rim (20) when the tire (30) is deflated.

The shield insert (40) can be implemented in a number of different ways, but it is common for all of the implementations to place the shield insert (40) at the widest point of the tire (30), in a so-called floating manner, due to the fact that the shield insert (40) has a suitable outer dimensions. The dimensions of different tires (30) and rims (20) may vary to a great extent. As an example, the diameter of a tire (30) may vary from one inch to five inches, and, the inside width of a rim (20) may vary from twenty millimeters to fifty millimeters.

Further, the circumference length of the shield insert (40) is chosen in light of tire dimension such as that it fits inside the tire in a floating manner. The length of the shield insert (40) may be predetermined or it may be cut in to a specific measure or it may comprise a mechanical fastening device or component that allows for adjustment of the circumference. Further, any potential additional elements such as fastening means preferably reside in the middle of the shield insert (40) so that there is little risk for chafing or contact with the rim (20) and the inside of the tire (30).

Few examples of sizes in relation to 27.5" and 29" tire sizes comprise:
- 21-26mm internal rim width and 2.25-2.5 tires or,
- 26-35mm internal rim width and 2.25-2.5" tires or,
- 34-45mm internal rim width and 2.6-3.0" tires.

In accordance with the aforementioned dimensions and cellular foam structure the shield insert (40) weight approximately 70-100 grams, with certain thickness and/or groove structures in the shield insert (40). However, other types of materials, as well as overlays may be used. The shield insert (40) may also comprise a sandwich structure.

In view of the aforementioned, the width of the shield insert (40) is also chosen in accordance with the tire (30) and rim (20) width wherein the requirement is that the shield insert (40) width should always be greater than the rim (20). Hence, the shield insert (40) width is preferably such that it doesn't touch the inner sidewalls of the tire (30) but that it surpasses the width of the rim (20) as depicted in figures 1 and 2. The shield insert (40) width is however preferably less or essentially the same as the tire inner maximum width.

Further, the shield according to the invention is useful since it makes it easier to mount a tubeless tire (30) on a rim (20) by air pressure. If the tire (30) and the rim (20) have different tolerances it can be difficult to mount the tire (30) on the rim (20) by air pressure. It has been found out that the anti-puncture shield insert (40) facilitates the mounting of the tire (30) on the rim (20) because it holds the edges of the tire (30) against the edges (21) of the rim. The shield insert (40) may be easily installed in the wheel (10) because the shield insert (40) isn't attached to either the rim (20) or tire (30) or any other structure in the wheel (10). Essentially, it is the geometrical dimensions (circumference and width) of the shield insert (40) that keeps the shield insert in the correct place in relation to the tire (30) and rim (20) of the wheel with the obvious notion that the tire (30) controls to an extent the position of the shield insert (40) between the tire (30) and the rim (20).

The shield (40) may comprise grooves, cut holes or cuts at the sides or through the middle of the shield (40), which may be used to reduce the weight and affect the rolling characteristics of the shield structure.

Although the figures depict a tubeless mountain bike tire other applications comprise motor vehicles and vehicles of greater weight in general.

## Claims

1. An anti-puncture shield insert (40) for a wheel (10), which wheel (10) comprises a rim (20) and an inflated tire (30) connected to the edges (21) of the rim (20),
wherein said shield insert (40) is made of a shock-absorbing material, **characterized in that** said shield insert (40) is placed at the widest point between the inner sidewalls of the tire (30), and, as a hit causes the tire to collapse, the shield insert (40) absorbs the shock taken by the tire (30) and the rim (20), by staying between inner parts of the tire, and, further, **in that** the shield insert (40) is floating relative to the tire (30), and **in that**, the anti-puncture shield insert (40) comprises a sandwich structure.

2. The anti-puncture shield insert (40) for a wheel (10) of claim 1 wherein the inflated tire (30) is an inflated tubeless tire.

3. The anti-puncture shield insert (40) for a bicycle wheel of claim 1.

4. The anti-puncture shield insert (40) for a wheel (10) as defined in claim 1, wherein anti-puncture shield insert is removably inserted into the wheel.

5. The anti-puncture shield insert (40) for a wheel (10) as defined in claim 1, wherein the anti-puncture shield (40) is made of a cellular plastic (28) with cells that stretch and, when needed, burst as a result of a hit taken by the tire (30), by absorbing the energy of the shock, and, thereby, protecting the tire (30) and rim (20).

6. The anti-puncture shield insert (40) for a wheel (10) of any preceding claim, wherein the anti-puncture shield (40) width is essentially the same as the tire (30) maximum inner width.

7. The anti-puncture shield insert (40) for a wheel (10) of any preceding claim, wherein the anti-puncture shield (40) width is less than the tire (30) maximum inner width.

8. The anti-puncture shield insert (40) for a wheel (10) of any preceding claim, wherein the anti-puncture shield insert (40) comprises cellular plastic that is coated.

## Patentansprüche

1. Abschirmungseinsatz gegen Reifenpannen (40) für ein Rad (10), wobei dieses Rad (10) eine Felge (20) und einen aufgepumpten Reifen (30), der mit den Rändern (21) der Felge (20) verbunden ist, umfasst,
wobei der Abschirmungseinsatz (40) aus einem stoßabsorbierenden Material hergestellt ist,
**dadurch gekennzeichnet, dass** der Abschirmungseinsatz (40) an der breitesten Stelle zwischen den inneren Seitenwänden des Reifens (30) angeordnet ist, und dass, wenn ein Schlag bewirkt, dass der Reifen zusammengedrückt wird, der Abschirmungseinsatz (40) den auf den Reifen (30) und die Felge (20) einwirkenden Stoß absorbiert, indem er zwischen inneren Teilen des Reifens verbleibt, und ferner dadurch, dass der Abschirmungseinsatz (40) relativ zu dem Reifen (30) freischwebend ist, und dadurch, dass der Abschirmungseinsatz gegen Reifenpannen (40) eine Sandwichstruktur umfasst.

2. Abschirmungseinsatz gegen Reifenpannen (40) für ein Rad (10) nach Anspruch 1, wobei der aufgepumpte Reifen (30) ein aufgepumpter schlauchloser Reifen ist.

3. Abschirmungseinsatz gegen Reifenpannen (40) für ein Fahrradrad nach Anspruch 1.

4. Abschirmungseinsatz gegen Reifenpannen (40) für ein Rad (10), wie in Anspruch 1 definiert, wobei der Abschirmungseinsatz gegen Reifenpannen herausnehmbar in das Rad eingesetzt ist.

5. Abschirmungseinsatz gegen Reifenpannen (40) für ein Rad (10), wie in Anspruch 1 definiert, wobei der Abschirmungseinsatz gegen Reifenpannen (40) aus Schaumkunststoff (28) mit Zellen hergestellt ist, welche sich infolge eines auf den Reifen (30) einwirkenden Schlages dehnen und, wenn nötig, platzen, wobei sie die Energie des Stoßes absorbieren und dadurch den Reifen (30) und die Felge (20) schützen.

6. Abschirmungseinsatz gegen Reifenpannen (40) für ein Rad (10) nach einem der vorhergehenden Ansprüche, wobei die Breite der Abschirmung gegen Reifenpannen (40) im Wesentlichen dieselbe wie die maximale innere Breite des Reifens (30) ist.

7. Abschirmungseinsatz gegen Reifenpannen (40) für ein Rad (10) nach einem der vorhergehenden Ansprüche, wobei die Breite der Abschirmung gegen Reifenpannen (40) kleiner als die maximale innere Breite des Reifens (30) ist.

8. Abschirmungseinsatz gegen Reifenpannen (40) für ein Rad (10) nach einem der vorhergehenden Ansprüche, wobei der Abschirmungseinsatz gegen Reifenpannen (40) Schaumkunststoff umfasst, welcher beschichtet ist.

## Revendications

1. Insert de protection anti-crevaison (40) pour une roue (10), laquelle roue (10) comprend une jante (20) et un pneu gonflé (30) relié aux bords (21) de la jante (20),
dans lequel ledit insert de protection (40) est constitué d'un matériau absorbant les chocs, **caractérisé en ce que** ledit l'insert de protection (40) est placé au point le plus large entre les flancs intérieurs du pneu (30), et, lorsqu'un choc provoque l'affaissement du pneu, l'insert de protection (40) absorbe le choc subi par le pneu (30) et la jante (20), en restant entre les parties intérieures du pneu, et, en outre, **en ce que** l'insert de protection (40) est flottant par rapport au pneu (30), et **en ce que** l'insert de protection anti-crevaison (40) comprend une structure en sandwich.

2. Insert de protection anti-crevaison (40) pour une roue (10) selon la revendication 1, dans lequel le pneu gonflé (30) est un pneu sans chambre à air gonflé.

3. Insert de protection anti-crevaison (40) pour une roue de bicyclette selon la revendication 1.

4. Insert de protection anti-crevaison (40) pour une roue (10) selon la revendication 1, dans lequel l'insert de protection anti-crevaison est inséré de manière amovible dans la roue.

5. Insert de protection anti-crevaison (40) pour une roue (10) selon la revendication 1, dans lequel la protection anti-crevaison (40) est constituée d'un plastique cellulaire (28) avec des cellules qui s'étirent et, si nécessaire, éclatent à la suite d'un choc reçu par le pneu (30), en absorbant l'énergie du choc, et, de ce fait, en protégeant le pneu (30) et la jante (20).

6. Insert de protection anti-crevaison (40) pour une roue (10) selon une quelconque des revendications précédentes, dans lequel la largeur de la protection anti-crevaison (40) est essentiellement la même que la largeur intérieure maximale du pneu (30).

7. Insert de protection anti-crevaison (40) pour une roue (10) selon une quelconque des revendications précédentes, dans lequel la largeur de la protection anti-crevaison (40) est inférieure à la largeur intérieure maximale du pneu (30).

8. Insert de protection anti-crevaison (40) pour une roue (10) selon une quelconque des revendications précédentes, dans lequel l'insert de protection anti-crevaison (40) comprend du plastique cellulaire qui est enduit.
